# EUROPEAN PATENT APPLICATION

(11) **EP 4 589 121 A1**
(43) Date of publication of application: **23.07.2025**
(21) Application number: 24208610.6
(22) Date of filing: 24.10.2024
(51) Int. Cl.: F01D 5/18, B22C 9/00

(54) **TURBINE BLADE WITH INTERNAL COOLING CHANNELS**

(30) Priority: 16.01.2024 KR 20240006539
(71) Applicant: Doosan Enerbility Co., Ltd., Seongsan-gu Changwon-si, Gyeongsangnam-do 51711 (KR)
(72) Inventor: Kim, Seok Beom, 04127 Seoul (KR)
(74) Representative: Ter Meer Steinmeister & Partner

(57) **Abstract**

A turbine blade (100) includes a root part (110) coupled to a turbine rotor disk (300) and an airfoil (1000) integrally formed on the root part and having internal cooling channels, the airfoil including a suction side (1002), a pressure side (1001), a leading edge (1003) formed to connect the suction side and the pressure side, a trailing edge (1004) formed to connect the suction side and the pressure side, a first cooling channel (1100) through which a first cooling fluid is discharged toward a rear side of the trailing edge, a second cooling channel (1200) through which a second cooling fluid is discharged toward the rear side of the trailing edge, and a plurality of cooling fins (1500) formed to extend from cooling channel surfaces of the first cooling channel and the second cooling channel to surfaces of the pressure side and the suction side.

## Description

### BACKGROUND

### 1. Technical Field

The present disclosure relates to a turbine blade and a gas turbine including the same.

### 2. Description of the Related Art

Generally, turbines, such as steam turbines, gas turbines, and the like, are machines that obtain rotating force with impulsive force using a flow of a compressed fluid such as gas.

The gas turbine generally includes a compressor, a combustor, and a turbine. The compressor has a compressor casing in which compressor vanes and compressor blades are alternately arranged, along with an air inlet.

The combustor serves to supply fuel to compressed air from the compressor and ignite the air-fuel gas with a burner to produce high temperature and high pressure combustion gas.

The turbine has a turbine casing in which turbine vanes and turbine blades are alternately arranged. A rotor is centrally disposed through the compressor, the combustor, the turbine, and an exhaust chamber.

The rotor is rotatably supported by bearings at opposite ends thereof. A plurality of disks is fixed to the rotor so that respective blades are attached thereto, and a driving shaft of a driving unit, such as a generator or the like, is coupled to an end side of the rotor on the exhaust chamber side.

Since such a gas turbine is devoid of a reciprocating mechanism such as a piston of a 4-stroke engine, there are no friction-causing features such as piston-cylinder contact parts, and thus the turbine has advantages of a significant reduction in lubricant consumption and amplitude of vibration, which is a are characteristic of a reciprocating mechanism, whereby high speed movement is enabled.

Briefly explaining the operation of the gas turbine, air compressed by the compressor is mixed with fuel and combusted in the combustor to provide hot combustion gas, which is then injected towards the turbine. As the injected combustion gas passes through the turbine vanes and the turbine blades, a rotating force is created and the rotor rotates.

The foregoing is intended merely to aid in the understanding of the background of the present disclosure, and is not intended to mean that the present disclosure falls within the purview of the related art that is already known to those skilled in the art.

### SUMMARY

Accordingly, the present disclosure has been made keeping in mind the above problems occurring in the related art, and an objective of the present disclosure is to provide a turbine blade having improved cooling efficiency, and a gas turbine including the same.

The object is solved by the features of the independent claim.

An aspect of the present disclosure provides a turbine blade mounted on a turbine rotor disk and rotated by high pressure combustion gases, the turbine blade including: a root part coupled to the turbine rotor disk at a lower side, and an airfoil integrally formed on an upper side of the root part and having an internal cooling channel, wherein the airfoil includes: a suction side forming a convex curved surface protruding outwardly; a pressure side forming a concave curved surface recessed toward the suction side; a leading edge formed at a leading end to connect the suction side and the pressure side; a trailing edge formed at a trailing end to connect the suction side and the pressure side; a first cooling channel through which a first cooling fluid introduced from a lower side of the leading edge is discharged toward a rear side of the trailing edge through a first serpentine flow path formed on the pressure side; a second cooling channel through which a second cooling fluid introduced from a lower side of the suction side is discharged toward the rear side of the trailing edge through a second serpentine flow path formed on the suction side; and a plurality of cooling fins formed to extend from cooling channel surfaces of the first cooling channel and the second cooling channel to surfaces of the pressure side and the suction side in a direction perpendicular to the surfaces the pressure side and the suction side.

The first cooling channel may include a first inlet extending downwardly from a bottom of the leading edge to allow the first cooling fluid to flow upward into the first cooling channel therethrough. The first cooling channel may include a first-primary flow channel to allow the first cooling fluid introduced through the first inlet to flow upward toward the airfoil tip therethrough. The first cooling channel may include a first-secondary flow channel formed adjacent to the first-primary flow channel to allow the first cooling fluid to flow downward toward the root part therethrough. The first cooling channel may include a first-tertiary flow channel formed adjacent to the first-secondary flow channel to allow the first cooling fluid to flow upward toward the airfoil tip therethrough.

The first cooling channel may further include a first-primary diversion channel extending from an upper end of the first-primary flow channel toward the trailing edge connecting the first-primary flow cannel to the first-secondary flow channel, and/or a first-secondary diversion channel extending from a lower end of the first-secondary flow channel toward the trailing edge connecting the first-secondary flow channel to the first-tertiary flow channel.

The first cooling channel may further include a first-tertiary diversion channel extending from an upper end of the first-tertiary flow channel toward the trailing edge. The first cooling channel may further include a first discharge channel out of which the first cooling fluid flowing through the first-tertiary flow channel is discharged to the outside.

The plurality of cooling fins may be arranged at predetermined intervals from each other in the first-secondary flow channel and/or the first-tertiary flow channel.

The plurality of cooling fins may be each formed in the form of a truncated square cone such that a bottom surface having a large area is connected to the pressure side.

The second cooling channel may include a second-primary inlet and a second-secondary inlet extending downwardly from a bottom of the suction side to allow the second cooling fluid to be introduced therethrough. The second cooling channel may include a second-primary flow channel and a second-tertiary flow channel to allow the second cooling fluid introduced through the second-primary inlet and the second-secondary inlet to flow upward toward the airfoil tip therethrough. The second cooling channel may include a second-secondary flow channel and a second-quaternary flow channel formed adjacent to the second-primary inlet and the second-tertiary inlet to allow the second cooling fluid to flow downward toward the root part therethrough.

The second cooling channel may further include a second-primary diversion channel extending from an upper end of the second-primary flow channel toward the trailing edge connecting the second-primary flow channel to the second-secondary flow channel, and/or a second-secondary diversion channel extending from an upper end of the second-tertiary flow channel toward the leading edge connecting the second-tertiary flow channel to the second-quaternary flow channel.

Each of the second-secondary flow channel and the second-quaternary flow channel may be provided at a lower end with a communication port in communication with a central cavity defined by a leading edge side cavity, a pressure side cavity, and a suction side cavity such that the second cooling fluids flowing through the second-secondary flow channel and the second-quaternary flow channel meet one another in the central cavity through the communication port.

The second cooling channel may further include a second discharge channel to allow the second cooling fluid in the central cavity to be discharged to the outside therethrough. A trailing edge side of the central cavity may be provided with a connection port in communication with the second discharge channel.

The plurality of cooling fins may be arranged in the second-secondary flow channel, the second-tertiary flow channel, and the second-quaternary flow channel at predetermined intervals from each other.

The plurality of cooling fins may be formed in the form of a truncated square cone such that a bottom surface having a large area is connected to the suction side.

Another aspect of the present disclosure provides a gas turbine including: a compressor configured to compress incoming air; a combustor configured to mix the compressed air with fuel and combust an air-fuel mixture; and a turbine configured to generate power with the combustion gases supplied from the combustor, the turbine including a turbine vane guiding the combustion gases along a path through which the combustion gases flows, and a turbine blade rotating with the combustion gases flowing through the path, wherein the turbine blade is a turbine blade according to any one of the herein described embodiments.

Another aspect of the present disclosure provides a gas turbine including: a compressor configured to compress incoming air; a combustor configured to mix the compressed air with fuel and combust an air-fuel mixture; and a turbine configured to generate power with the combustion gases supplied from the combustor, the turbine including a turbine vane guiding the combustion gases along a path through which the combustion gases flows, and a turbine blade rotating with the combustion gases flowing through the path, wherein the turbine blade includes an airfoil having an internal cooling channel, wherein the airfoil includes: a suction side forming a convex curved surface protruding outwardly; a pressure side forming a concave curved surface recessed toward the suction side; a leading edge formed at a leading end to connect the suction side and the pressure side; a trailing edge formed at a trailing end to connect the suction side and the pressure side; a first cooling channel through which a first cooling fluid introduced from a lower side of the leading edge is discharged toward a rear side of the trailing edge through a first serpentine flow path formed on the pressure side; a second cooling channel through which a second cooling fluid introduced from a lower side of the suction side is discharged toward the rear side of the trailing edge through a second serpentine flow path formed on the suction side; and a plurality of cooling fins formed to extend from cooling channel surfaces to of the first cooling channel and the second cooling channel to surfaces of the pressure side and the suction side in a direction perpendicular to the surfaces of the pressure side and the suction side.

The first cooling channel may include: a first inlet extending downwardly from a bottom of the leading edge to allow the first cooling fluid to flow upward into the first cooling channel therethrough; a first-primary flow channel to allow the first cooling fluid introduced through the first inlet to flow upward toward the airfoil tip therethrough; a first-secondary flow channel formed adjacent to the first-primary flow channel to allow the first cooling fluid to flow downward toward the root part therethrough; and a first-tertiary flow channel formed adjacent to the first-secondary flow channel to allow the first cooling fluid to flow upward toward the airfoil tip therethrough.

The first cooling channel may further include a first-primary diversion channel extending from an upper end of the first primary flow channel toward the trailing edge connecting the first-primary flow channel to the first-secondary flow channel, and a first-secondary diversion channel extending from a lower end of the first-secondary flow channel toward the trailing edge connecting the first-secondary flow channel to the first-tertiary flow channel.

The first cooling channel may further include a first-tertiary diversion channel extending from an upper end of the first-tertiary flow channel toward the trailing edge, and a first discharge channel out of which the first cooling fluid flowing through the first-tertiary flow channel is discharged to the outside.

The plurality of cooling fins may be arranged at predetermined intervals from each other in the first-secondary flow channel and the first-tertiary flow channel.

The plurality of cooling fins may be each formed in the form of a truncated square cone such that a bottom surface having a large area is connected to the pressure side.

The second cooling channel may include: a second-primary inlet and a second-secondary inlet extending downwardly from a bottom of the suction side to allow the second cooling fluid to be introduced upward therethrough; a second-primary flow channel and a second-tertiary flow channel to allow the second cooling fluid introduced through the second-primary inlet and the second-secondary inlet to flow upward toward the airfoil tip therethrough; and a second-secondary flow channel and a second-quaternary flow channel formed adjacent to the second-primary inlet and the second-tertiary inlet to allow the second cooling fluid to flow downward toward the root part therethrough.

The second cooling channel may further include a second-primary diversion channel extending from an upper end of the second-primary flow channel toward the trailing edge connecting the second-primary flow channel to the second-secondary flow channel, and a second-secondary diversion channel extending from an upper end of the second-tertiary flow channel toward the leading edge connecting the second-tertiary flow channel to the second-quaternary flow channel.

Each of the second-secondary flow channel and the second-quaternary flow channel may be provided at a lower end with a communication port in communication with a central cavity defined by a leading edge side cavity, a pressure side cavity, and a suction side cavity such that the second cooling fluids flowing through the second-secondary flow channel and the second-quaternary flow channel meet one another in the central cavity through the communication port.

The second cooling channel may further include a second discharge channel to allow the second cooling fluid in the central cavity to be discharged to the outside therethrough, and a trailing edge side of the central cavity may be provided with a connection port in communication with the second discharge channel.

The plurality of cooling fins may be arranged in the second-secondary flow channel, the second-tertiary flow channel, and the second-quaternary flow channel at predetermined intervals from each other.

The plurality of cooling fins may be formed in the form of a truncated square cone such that a bottom surface having a large area is connected to the suction side.

As described above, according to the turbine blade and the gas turbine including the same, the cooling performance of the airfoil may be improved by providing the plurality of cooling fins in the form of columns that become progressively thicker toward one side, in the first cooling channel for cooling the leading edge and the pressure side, and in the second cooling channel for cooling the trailing edge and the suction side.

### BRIEF DESCRIPTION OF THE DRAWINGS

FIG. 1 is a perspective view illustrating the interior of a gas turbine according to an exemplary embodiment the present disclosure;
FIG. 2 is a partially-cut cross-sectional view illustrating a portion of the gas turbine of FIG. 1;
FIG. 3 is a perspective view illustrating a turbine blade including an airfoil according to an exemplary embodiment of the present disclosure;
FIG. 4 is a perspective view from a pressure side, illustrating the interior of the airfoil according to an embodiment of the present disclosure;
FIG. 5 is a perspective view from a pressure side, illustrating the interior of the airfoil according to an embodiment of the present disclosure;
FIGS. 6 and 7 are perspective views illustrating a first cooling channel formed inside the airfoil according to an embodiment of the present disclosure;
FIGS. 8 and 9 are perspective views illustrating a second cooling channel formed inside the airfoil according to an embodiment of the present disclosure;
FIG. 10 is a cross-sectional view taken along line A-A' of FIG. 3;
FIG. 11 is a perspective view illustrating a second cooling channel formed inside the airfoil according to a variant of the present disclosure;
FIG. 12 is a perspective view from a pressure side, illustrating the interior of an airfoil according to another embodiment of the present disclosure;
FIG. 13 is a perspective view from a pressure side, illustrating the interior of an airfoil according to another embodiment of the present disclosure;
FIG. 14A is a perspective view illustrating the shape of one cooling fin, and FIG. 14B is a cross-sectional view illustrating air flowing around a plurality of cooling fins;
FIGS. 15A, 15B, and 15C are diagrams illustrating a temperature distribution of air flowing around the plurality of cooling fins; and
FIG. 16 is a graph showing a comparison of the cooling effects between circular fins and square cone-shaped fins.

### DETAILED DESCRIPTION

Hereinafter, exemplary embodiments of the present disclosure will be described in detail with reference to the accompanying drawings. However, it should be noted that the present disclosure is not limited thereto, but may include all of modifications, equivalents or substitutions within the scope of the present disclosure.

Terms used herein are used to merely describe specific embodiments, and are not intended to limit the present disclosure. As used herein, an element expressed as a singular form includes a plurality of elements, unless the context clearly indicates otherwise. Further, it will be understood that the terms "including" or "including" specifies the presence of stated features, numbers, steps, operations, elements, parts, or combinations thereof, but does not preclude the presence or addition of one or more other features, numbers, steps, operations, elements, parts, or combinations thereof. Hereinafter, preferred embodiments of the present disclosure will be described in detail with reference to the accompanying drawings.

Hereinafter, preferred embodiments of the present disclosure will be described in detail with reference to the accompanying drawings. It is noted that like elements are denoted in the drawings by like reference symbols as whenever possible. Further, the detailed description of known functions and configurations that may obscure the gist of the present disclosure will be omitted. For the same reason, some of the elements in the drawings are exaggerated, omitted, or schematically illustrated.

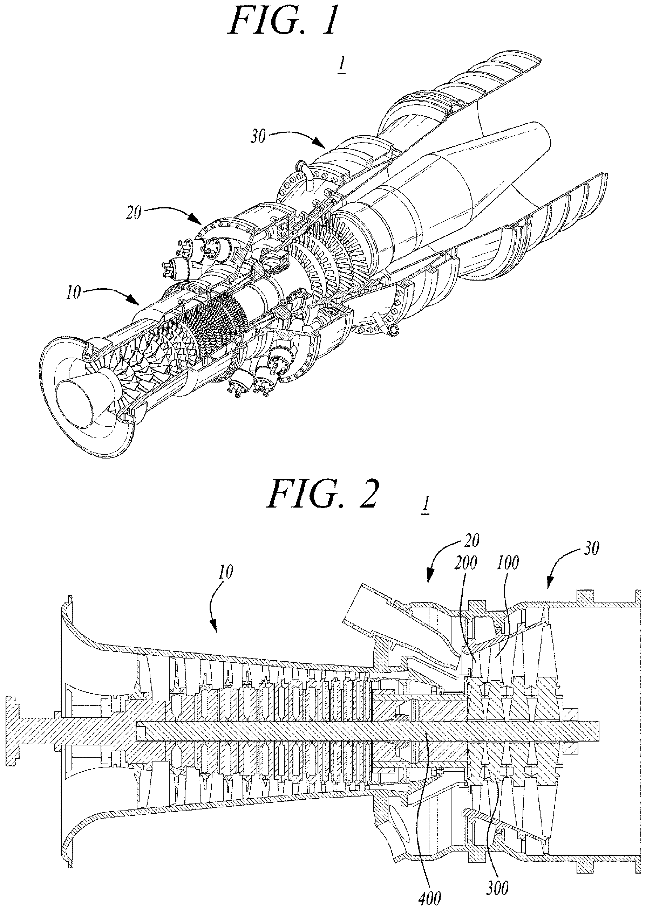

FIG. 1 is a perspective view illustrating the interior of a gas turbine according to an exemplary embodiment the present disclosure, and FIG. 2 is a partially-cut cross-sectional view illustrating a portion of the gas turbine of FIG. 1.

As illustrated in FIGS. 1 and 2, the gas turbine 1 includes a compressor 10, a combustor 20, and a turbine 30. The compressor 10 serves to compress the incoming air at a high pressure, and delivers the compressed air to the combustor side. The compressor 10 has a plurality of compressor blades installed circumferentially, which rotate with the receipt of a portion of the power generated from the rotation of the turbine 30, so that the air is fed toward the combustor 20 while being compressed by the rotation of the blade combustor. The size and installation angle of the blade may vary depending on the installation location.

The compressed air from the compressor 10 is fed to the combustor 20 so that the compressed air is mixed with fuel and combusted in a combustion chamber-fuel nozzle modules arranged in an annular shape. The high-temperature combustion gas generated due to combustion is discharged to the turbine 30 to rotate the same.

The turbine 30 includes turbine rotor disks 300 that are arranged in a multi-stage around a center tie rod 400 that axially couples the turbine rotor disks. The turbine rotor disk 300 includes a plurality of turbine blades 100 arranged circumferentially. The turbine blade 100 may be coupled to the turbine rotor disk 300 in a dovetail-fit or the like. In addition, a turbine vane 200 is provided between the turbine blades 100 while being fixed to a housing so as to guide the flow direction of the combustion gas passing through the turbine blades 200.

As illustrated in FIG. 2, the turbine 30 may include n turbine vanes 200 and n turbine blades 100 alternately arranged along the axial direction of the gas turbine 1. The hot combustion gas passes through the turbine vanes 200 and the turbine blades 100 along the axial direction so as to rotate the turbine blades 100.

The airfoil according to an embodiment of the present disclosure may be an airfoil applied to the turbine blade 100. In addition, the technical idea described herein is not limited to a gas turbine, but may also be applied to a steam turbine and other apparatus including an airfoil.

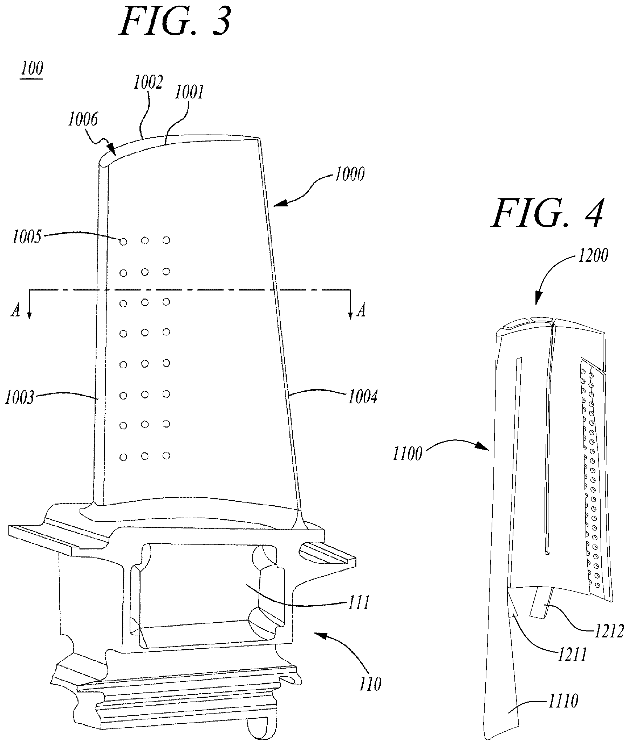

FIG. 3 is a perspective view illustrating a turbine blade including an airfoil according to an exemplary embodiment of the present disclosure.

The turbine blade 100 is mounted on the turbine rotor disk 300 to rotate the turbine with high-pressure combustion gas. The turbine blade 100 includes the lower-side root part 110 fastened to the turbine rotor disk 300, and the upper-side airfoil 1000 which is integrally provided on the upper side of the root part 110. The airfoil is configured to rotate due to the gas pressure difference between front and rear surfaces thereof, to which gas pressure is applied, driving the rotation of the turbine. The lower side, a lower direction and an upper side and an upper direction are defined based on the radial direction from the rotor disk 300 when the turbine blade 100 is assembled with the rotor disk 300.

On the outer surface of the root part 110, a shank and a platform are formed to protrude outwards (i.e., in the axial direction along the turbine) so that the turbine blade 100 can be fixed rigidly. The root part 110 is provided with an inlet 111 through which the cooling fluid flows into the airfoil 1000. The cooling fluid is a portion of compressed air compressed by the compressor 10 or compressed air supplied from the outside, which is then supplied from the compressor 10 to the root part 110 and into the airfoil 1000 of the turbine blade 100 through the inlet 111. Alternatively, the cooling fluid may be supplied from the compressor 10 to the root part 110 through an internal flow path (not shown) connected to the turbine 30, and flows into the airfoil 1000 through the inlet 111 so that the turbine blade 100 is cooled.

The airfoil 1000 has a front surface convexly curved outwards as a suction side 1002 and a rear surface concavely curved inwards as a pressure side 1001 so that a difference in pressure applied to the front and rear surfaces of the airfoil 1000 is maximized, allowing for a smooth gas flow around the airfoil.

The airfoil 1000 has a leading edge 1003 and a trailing edge 1004 at points where the pressure side 1001 and the suction side 1002 meet. The leading edge 1003 is an edge of the airfoil 1000 which receives the incoming fluid flow, and the trailing edge 1004 is an opposite distal edge where the fluid flow exits. In addition, the direction from the root part toward an airfoil tip 1006 is referred to as a span direction. In other words, the span direction is the radial direction from the rotor disk 300 when the turbine blade 100 is assembled with the rotor disk 300.

The airfoil 1000 may include a plurality of cooling holes 1005 formed on the suction side 1002 or the pressure side 1001. As the cooling fluid is discharged to the outside through the cooling holes 1005 from the inside of the airfoil, an air curtain is formed around the airfoil 1000, thereby externally cooling the airfoil in a so-called film cooling method. Meanwhile, according to an embodiment, cooling holes 1005 may not be formed on the leading edge 1003 side.

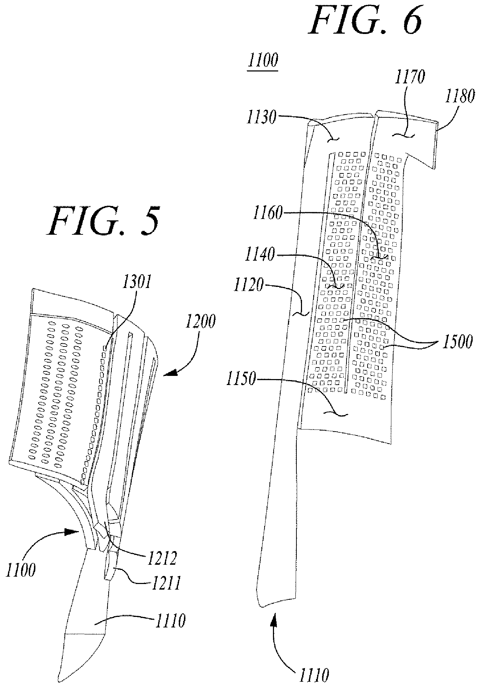

FIG. 4 is a perspective view from a pressure side, illustrating the interior of the airfoil according to an embodiment of the present disclosure, and FIG. 5 is a perspective view from a suction side, illustrating the interior of the airfoil according to an embodiment of the present disclosure.

Referring to FIGS. 4 and 5, the airfoil 1000 includes a first cooling channel 1100 and a second cooling channel 1200 therein through which cooling fluid flows. The cooling fluid collides with inner walls of the first and second cooling channels 1100 and 1200 during flowing through the first and second cooling channels 1100 and 1200 and absorbs heat from the airfoil 1000 to cool the same.

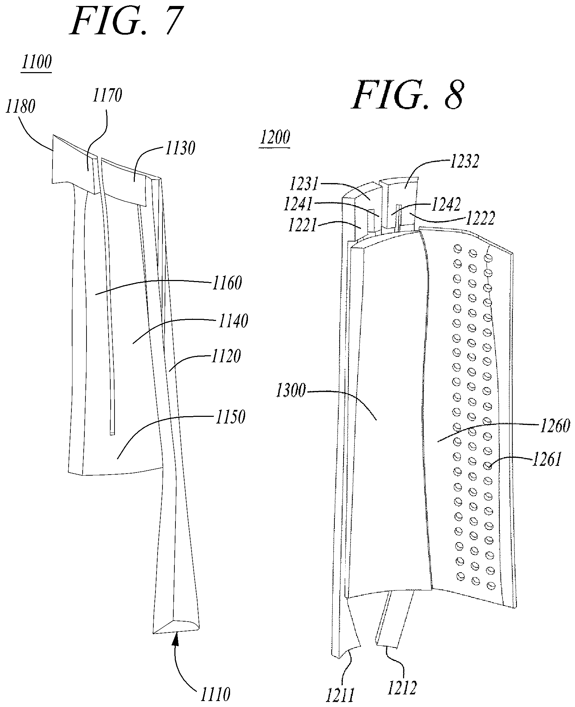

The first cooling channel 1100 allows cooling fluid introduced from the lower side of the leading edge 1003 to flow into serpentine flow paths 1120 to 1180 (see also FIGS. 6 and 7) formed on the pressure side 1001, and to be then discharged to the rear side of the trailing edge 1004.

The second cooling channel 1200 allows the cooling fluid introduced from the lower side of the suction side 1002 to be divided and flow into a plurality of serpentine flow paths 1221 to 1251 and 1222 to 1252 (see also FIG. 8) formed on the suction side 1002, allows the divided cooling fluids into the serpentine channels to meet together (i.e., joined) at the lower side of the serpentine flow paths, and allows the cooling fluid to be discharged to the rear side of the trailing edge 1004.

In the following description, the serpentine flow paths 1120 to 1180 on the pressure side 1001 forming the first cooling channel 1100 are referred to as a first serpentine flow path, and the cooling fluid introduced into the first serpentine flow path is referred to as a first cooling fluid. Similarly, the serpentine flow paths 1221 to 1251 and 1222 to 1252 on the suction side 1002 forming the second cooling channel 1200 are referred to as a second serpentine flow path, and the cooling fluid introduced into the second serpentine flow path is referred to as a second cooling fluid. Each of the serpentine flow paths may refer to a flow channel formed in a serpentine shape so that fluid sequentially flows from the bottom to the top, flows to an adjacent channel, and then flows from the top to the bottom again or so that a fluid flows from top to bottom, moves to an adjacent passage, and then flows again from bottom to top.

As will be described later, a plurality of cooling fins 1500 may be formed to extend from inner circumferential surfaces to opposite surfaces of the first cooling channel 1100 and the second cooling channel 1200 in a direction substantially perpendicular to the pressure side 1001 (or a surface of the pressure side 1011) and the suction side 1002 (or a surface of the suction side 1002).

The plurality of cooling fins 1500 may be formed in the form of columns or pins that are integrally connected from one sides to the opposite sides on the inner circumferential surfaces of the first cooling channel 1100 and the second cooling channel 1200. Thus, the cooling fins may be referred to as cooling fins in the form of pins. The plurality of cooling fins 1500 may be arranged in a plurality of rows and columns. According to an embodiment, when there are a plurality of rows of cooling fins 1500, a n+ 1-th row of cooling fins are not arranged in line with a n-th row of cooling fins, but may be alternately arranged with each other. In other words, the cooling fins in a row may be alternately arranged with each other with the cooling fins in an adjacent row, and the cooling fins in every other row may be arranged to be aligned with each other.

FIGS. 6 and 7 are perspective views illustrating a first cooling channel 1100 formed inside an airfoil according to an embodiment of the present disclosure, wherein FIG. 6 is a view of the first cooling channel 1100, viewed from the pressure side 1001 and FIG. 7 is a view of the first cooling channel 1100, viewed from the suction side 1002.

Referring to FIGS. 6 and 7, the first cooling channel 1100 may include a first inlet 1110, a first-primary flow channel 1120, a first-primary diversion channel 1130, a first-secondary flow channel 1140, a first-secondary diversion channel 1150, a first-tertiary flow channel 1160, a first-tertiary diversion channel 1170, and a first discharge channel 1180. Of course, the number of flow channels and diversion channels is illustrative, and the number of channels is not limited thereto.

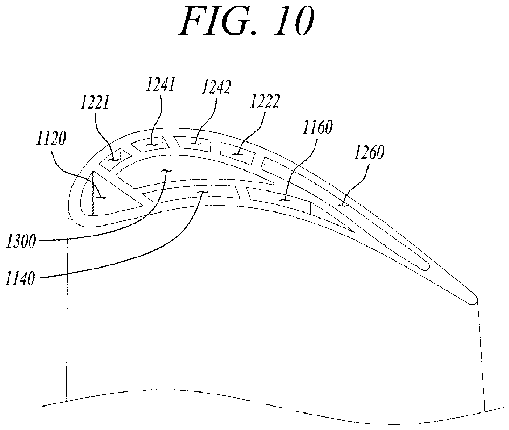

The first inlet 1110 is formed to extend a predetermined length downwardly from a lower side of the leading edge 1003. Specifically, the first inlet 1110 is formed to extend downwardly in a state of being fluidly connected to a cavity on the leading edge 1003 side. The cavity on the leading edge 1003 (i.e., the leading edge 1003 side cavity) may be substantially the same with a first-primary flow channel 1120 (see FIG. 10). At least a portion of the cooling fluid introduced into the inlet 111 formed in the root part 110 may enter the first inlet 1110. The cooling fluid entering the first inlet 1110 is a first cooling fluid.

The first-primary flow channel 1120 communicates with the first inlet 1110 so that the first cooling fluid introduced into the first inlet 1110 flows upward toward the airfoil tip 1006 therethrough. The first-primary flow channel 1120 may be substantially the same with a cavity on the side of the leading edge 1003.

At the top of the first-primary flow channel 1120, the first-primary diversion channel 1130 is formed to extend toward the trailing edge 1004 so that the first cooling fluid flowing through the first-primary flow channel 1120 flows to the first-secondary flow channel 1140 through the first-primary diversion channel 1130. The first-secondary flow channel 1140 allows the first cooling fluid to flow downward toward the root part 110 therethrough.

At the bottom of the first-secondary flow channel 1140, the first-secondary diversion channel 1150 is formed to extend toward the trailing edge 1004 so that the first cooling fluid flowing through the first-secondary flow channel 1140 flows to the first-tertiary flow channel 1160 through the first-secondary diversion channel 1150. The first-tertiary flow channel 1160 allows the first cooling fluid to flow upward from the root part 110 toward the airfoil tip 1006.

At the top of the first-tertiary flow channel 1160, the first-tertiary diversion channel 1170 is formed to extend toward the trailing edge 1004 so that the first cooling fluid flowing through the first-tertiary flow channel 1126 flows to the first discharge channel 1180 through the first-tertiary diversion channel 1170. The first cooling fluid is discharged to the outside of the airfoil 1000 through the first discharge channel 1180. The first discharge channel 1180 may have a plurality of discharge holes (not shown) for discharging the first cooling fluid.

By way of above-configuration, the first-primary flow channel 1120 is formed on the leading edge 1003 side, and the channels 1130 to 1180 are formed to be connected directly or indirectly to the first-primary flow channel 1120 on the pressure side 1001. The above channels 1120 to 1180 form a single first serpentine flow path (i.e., the first cooling channel 1100), which may increase the flow time of the first cooling fluid to improve cooling efficiency. In particular, the first cooling fluid flowing through the first cooling channel 1100 may effectively cool the leading edge 1003, the pressure side 1001, and the airfoil tip on the pressure side.

As illustrated in FIG. 6, the plurality of cooling fins 1500 may be arranged in the first-secondary flow channel 1140 and the first-tertiary flow channel 1160 at predetermined intervals from each other. Here, accordingly to an embodiment, no cooling fins are formed in the first-primary flow channel 1120. However, the present disclosure is not limited thereto, and a plurality of cooling fins may also be formed in the first-primary flow channel 1120 as well.

As will be described later, the plurality of cooling fins 1500 may be formed in the form of a square cone (or a truncated square cone) such that a bottom surface with a large area is connected to the pressure side 1001. The first cooling channel 1100 is disposed close to the pressure side 1001 of the airfoil 1000, so that the first cooling fluid may rapidly cool the sidewall of the pressure side 1001 of the airfoil 1000.

According to an embodiment of the present disclosure, the plurality of cooling fins 1500 may be formed on the walls of the suction side 1002, and the cooling air may be discharged through the plurality of cooling fins 1500 formed on the walls of the suction side 1002 while flowing in the second cooling channel 1200, to form the film cooling of the surface of the suction side 1002. The walls of the suction side 1002 refer to the walls between the outer surface of the suction side 1002 and the second cooling channel 1200.

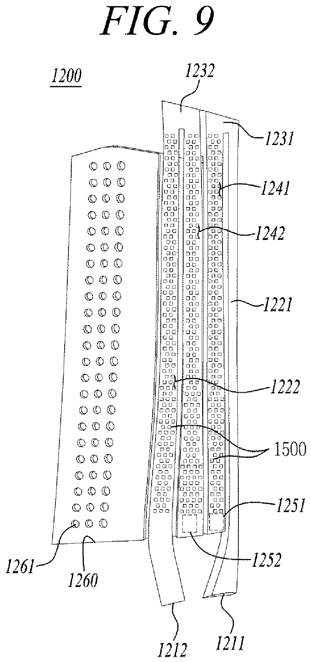

The plurality of cooling fins may have a truncated quadrangular pyramid (i.e., truncated square cone). The bottom surface of the truncated quadrangular pyramid, which has a larger area, is formed on an outer surface of the walls of the suction side 1002 (i.e., outer surface of the suction side 1001), and the top surface of the truncated polygonal pyramid or the truncated cone, which has a smaller area, is formed on an inner surface of the walls of the second cooling channel 1200, so that the cooling air coming out of the second cooling channel 1200 through the plurality of fins 1500 can move along the outer surface of the suction side 1002 more smoothly.FIGS. 8 and 9 are perspective views illustrating a second cooling channel 1200 formed inside the airfoil according to an embodiment of the present disclosure, wherein FIG. 8 is a view of the second cooling channel 1200 viewed from the pressure side 1001 and FIG. 9 is a view of the second cooling channel 1200 viewed from the suction side 1002.

Referring to FIGS. 8 and 9, the second cooling channel 1200 may include a second inlet 1211, a second-primary flow channel 1221, a second-primary diversion channel 1231, a second-secondary flow channel 1241, a second-secondary inlet 1212, a second-tertiary flow channel 1222, a second-secondary diversion channel 1232, a second-quaternary flow channel 1242, and a second discharge channel 1260.

The second-primary inlet 1211, the second-primary flow channel 1221, the second-primary diversion channel 1231, and the second-secondary flow channel 1241 may form a second-primary serpentine flow path, and the second-secondary inlet 1212, the second-tertiary flow channel 1222, the second-secondary diversion channel 1232, and the second-quaternary flow channel 1242 may form a second serpentine flow path. Of course, the number of flow channels, diversion channels, and serpentine flow paths is illustrative, and the number of channels and serpentine flow paths is not limited thereto.

The second-primary inlet 1211 and the second-secondary inlet 1212 are formed to extend a predetermined length downwardly from the bottom of the suction side 1002. The second-primary inlet 1211 may be formed on the leading edge 1003 side, and the second-secondary inlet 1212 may be formed on the relatively trailing edge 1004 side next to the second-primary inlet 1211.

At least a portion of the cooling fluid that was introduced into the inlet 111 formed in the root part 110 may flow into the second-primary inlet 1211, and at least a portion may flow into the second-secondary inlet 1212. The cooling fluid introduced into the second inlets 1211 and 1212 is a second cooling fluid.

The second-primary flow channel 1221 communicates with the second-primary inlet 1211 so that the second cooling fluid introduced into the second-primary inlet 1211 flows upward toward the airfoil tip 1006 therethrough.

At the top of the secondary-primary flow channel 1221, the second-primary diversion channel 1231 is formed to extend toward the trailing edge 1004 side so that the second cooling fluid flowing through the second-primary flow channel 1221 flows to the second-secondary flow channel 1241 through the second-primary diversion channel 1231. The second-secondary flow channel 1241 allows the second cooling fluid to flow downward toward the root part 110.

The second-tertiary flow channel 1222 communicates with the second-secondary inlet 1212 so that the second cooling fluid introduced into the second-secondary inlet 1212 flows upward toward the airfoil tip 1006 therethrough.

At the top of the second-tertiary flow channel 1222, the second-secondary diversion channel 1232 is formed to extend toward the leading edge 1003 side so that the second cooling fluid flowing through the second-tertiary flow channel 1222 flows to the second-quaternary flow channel 1242 through the second-secondary diversion channel 1232. The second-quaternary flow channel 1242 allows the second cooling fluid to flow downward toward the root part 110.

FIG. 10 is a cross-sectional view looking down from line A-A' of FIG. 3.

On each side of the lower ends of the second-secondary flow channel 1241 and the second-quaternary flow channel 1242 is provided with a communication port 1251 and 1252 that communicate with a central cavity 1300 (see FIG. 10). The communication ports 1251 and 1252 are formed on the sides of the central cavity 1300. That is, the communication ports 1251 and 1252 may be formed in a wall between the second-secondary flow channel 1241 and the central cavity 1300 and between the second-quaternary flow channel 1242 and the central cavity 1300, respectively. Of course, the communication ports 1251 and 1252 need not necessarily be formed on the sides.

The central cavity 1300 is a flow space formed between the leading edge side cavity 1120, the pressure side cavities 1140 and 1160, and the suction side cavities 1221, 1241, 1242, and 1222. The second cooling fluid flowing through the second-secondary flow channel 1241 and the second-quaternary flow channel 1242 meet together in the central cavity 1300 through the communication ports 1251 and 1252.

The second discharge channel 1260 is formed to extend substantially flush with the height of the central cavity 1300, and is formed to communicate with a connection port 1301 (see FIG. 5) formed on the trailing edge side of the central cavity 1300. In addition, a plurality of discharge holes 1261 for discharging the second cooling fluid may be formed in a matrix shape in a predetermined area on the trailing edge side of the second discharge channel 1260.

According to an embodiment, the central cavity 1300 may be configued with a shorter height such that it is disposed radially below (i.e., radially inward than) the first-primary diversion channel 1130 and the first-tertiary diversion channel 1170 while the first-primary flow channel 1120, the first-secondary flow channel 1140, the first-tertiary flow channel 1160 of the first cooling passage 1100 and the second-primary flow channel 1221, a the second-secondary flow channel 1241, the second-tertiary flow channel 1222, the second-quaternary flow channel 1242 are substantially in a same height. According to an embodiment, the first discharge channel 1180 may be disposed such that its radial location is more outward than the central cavity 1300 and the second discharge channel 1260.

Also, when a direction between the front surface (pressure side) and the rear surface (suction side) is defined as a width direction, the width of the first-primary diversion channel 1130 and the first-tertiary diversion channel 1170 in the width direction may be larger than the width of the first-primary flow channel 1120, the first-secondary flow channel 1140, and the first-tertiary flow channel 1160 such that the cavities formed by the first-primary diversion channel 1130 and the first-tertiary diversion channel 1170 are disposed radially above the central cavity 1300 and the second discharge channel 1260, respectively.

The second-primary flow channel 1221, the second-secondary flow channel 1241, the second-tertiary flow channel 1222, and the second-quaternary flow channel 1242 may form at least two serpentine flow paths on the suction side 1002. These continuous at least two serpentine channels design elongate and increase the flow path and the flow time of the second cooling fluid to improve cooling efficiency. In particular, the second cooling fluid flowing through the second cooling channel 1200 may effectively cool the trailing edge 1004, the suction side 1002, and the airfoil tip on the suction side 1002.

As illustrated in FIG. 9, the plurality of cooling fins 1500 may be arranged in the second-secondary flow channel 1241, the second-tertiary flow channel 1222, and the second-quaternary flow channel 1242 at predetermined intervals from each other. According to an embodiment, no cooling fins may be formed in the second-primary flow channel 1221. However, the present disclosure is not limited thereto, and a plurality of cooling fins may be formed in the second-primary flow channel 1221 as well.

As will be described later, the plurality of cooling fins 1500 may be formed in the form of a square cone such that a bottom surface with a large area is connected to the suction side 1002. The second cooling channel 1200 is disposed close to the suction side 1002 of the airfoil 1000 so that the second cooling fluid may rapidly cool the sidewall of the suction side 1002 of the airfoil 1000.

According to an embodiment of the present disclosure, the plurality of cooling fins 1500 may be formed on the walls of the suction side 1002, and the cooling air may be discharged through the plurality of cooling fins 1500 formed on the walls of the suction side 1002 while flowing in the second cooling channel 1200, to form the film cooling of the surface of the suction side 1002. The walls of the suction side 1002 refer to the walls between the outer surface of the suction side 1002 and the second cooling channel 1200.

The plurality of cooling fins may have a truncated quadrangular pyramid(i.e., truncated square cone). The bottom surface of the truncated quadrangular pyramid, which has a larger area, is formed on an outer surface of the walls of the suction side 1002 (i.e., outer surface of the suction side 1001), and the top surface of the truncated polygonal pyramid or the truncated cone, which has a smaller area, is formed on an inner surface of the walls of the second cooling channel 1200, so that the cooling air coming out of the second cooling channel 1200 through the plurality of fins 1500 can move along the outer surface of the suction side 1002 more smoothly.

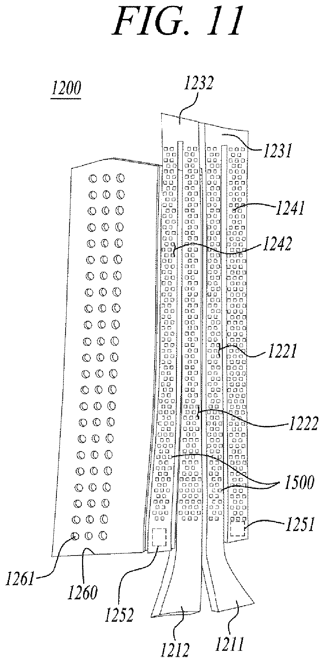

Next, an airfoil according to a another exemplary embodiment of the present disclosure will be described with reference to FIG. 11. FIG. 11 is a perspective view illustrating a second cooling channel formed inside an airfoil according to this exemplary embodiment of the present disclosure.

The airfoil according to this embodiment of the present disclosure includes a first cooling channel 1100 and a second cooling channel 1200, and has the same configuration as that of the above-mentioned embodiments, except for a portion of the second cooling channel 1200. Therefore, repetitive description thereof will be omitted, and for convenient of description, identical or corresponding configurations are designated with the same symbols.

Referring to FIG. 11, unlike in the above-mentioned embodiment, the second cooling channel 1200 is formed such that a second-primary inlet 1211 and a second-secondary inlet 1212 are disposed in close proximity to each other. Accordingly, the second-primary flow channel 1221 and the second-tertiary flow channel 1222 are also formed in close proximity to each other, the second-primary diversion channel 1231 is formed to extend from the top of the second-primary flow channel 1221 toward the leading edge 1003 side, and the second-secondary diversion channel 1232 is formed to extend from the top of the second-tertiary flow channel 1222 toward the trailing edge 1004 side.

In the aforementioned embodiment, cooling fluid that was introduced into the inlet 111 formed in the root part 110 is divided and introduced into the first inlet 1110, the second-primary inlet 1211, and the second-secondary inlet 1212, wherein the second-primary inlet 1211 and the second-secondary inlet 1212 are relatively far apart, and the first inlet 1110 and the second-primary inlet 1211 are adjacent to each other, so that more cooling fluid may flow toward the first inlet 1110 side.

On the other hand, in this embodiment, since the second-primary inlet 1211 and the second-secondary inlet 1212 are formed in close proximity to each other, some of the second cooling fluid that should flow into the second inlets 1211 and 1212 may be prevented from flowing into the first inlet 1110.

As illustrated in FIG. 11, the plurality of cooling fins 1500 may be arranged in the second-primary flow channel 1221, the second-secondary flow channel 1241, the second-tertiary flow channel 1222, and the second-quaternary flow channel 1242 at predetermined intervals from each other, similarly as described above. Here, when there are a plurality of rows of cooling fins 1500, the plurality of cooling fins 1500 may be arranged in a plurality of rows and columns such that an n+1-th row of cooling fins may not be arranged in line with an n-th row of cooling fins, but may be alternately arranged with the n-th row of cooling fins. In other words, the cooling fins in a row may be alternately arranged with each other with the cooling fins in an adjacent row, and the cooling fins in every other row may be arranged to be aligned with each other.

As will be described later, the plurality of cooling fins 1500 may be formed in the form of a square cone such that a bottom surface with a large area is connected to the suction surface 1002 side. The second cooling channel 1200 is disposed close to the suction side 1002 of the airfoil 1000 so that the second cooling fluid may rapidly cool the sidewall of the suction side 1002 of the airfoil 1000.

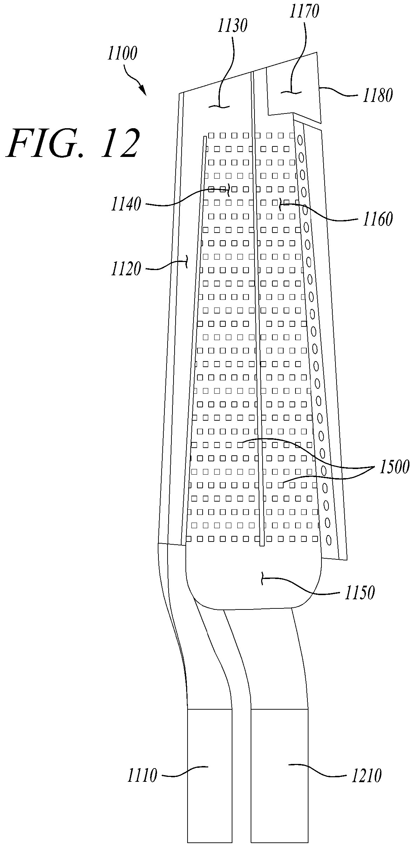

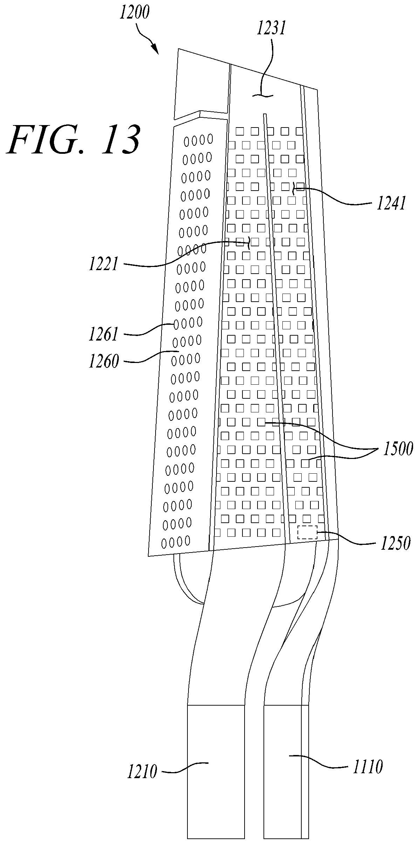

FIG. 12 is a perspective view from the pressure side, illustrating the interior of an airfoil according to yet another embodiment of the present disclosure, and FIG. 13 is a perspective view from the suction side, illustrating the interior of an airfoil according to such yet another embodiment of the present disclosure.

The airfoil 1000 according to the embodiment of the present disclosure has a similar shape of the first cooling channel 1100, but a different shape of the second cooling channel 1200 in particular, compared to the above-mentioned embodiments.

Specifically, as illustrated in FIG. 12, the first cooling channel 1100 may include a first inlet 1110, a first-primary flow channel 1120, a first-primary diversion channel 1130, a first-secondary flow channel 1140, a second-secondary diversion channel 1150, a first-tertiary flow channel 1160, a first-tertiary diversion channel 1170, and a first discharge channel 1180, as in the previous embodiments. A plurality of cooling fins 1500 may be integrally formed in the first-secondary flow channel 1140 and the first-tertiary flow channel 1160 in the form of columns.

On the other hand, the second cooling channel 1200 may include a second inlet 1210, a second-primary flow channel 1221, a second-primary diversion channel 1231, a second-secondary flow channel 1241, and a second discharge channel 1260. According to an embodiment, the second-secondary flow channel 1241 may be disposed relatively closers to the leading edge 1003 side than the second-primary flow channel 1221. The second-primary diversion channel 1231 may be formed to extend toward the leading edge so that the second cooling fluid flowing through the second-primary flow channel 1221 flows to the second-secondary flow channel 1241. In other words, while the second cooling channel 1200 in the previous embodiment include two inlets, four flow channels, two diversion channels, and one discharge channel, the second cooling channel 1200 in the present embodiment may include one inlet, two flow channels, one diversion channel, and one discharge channel.

On the bottom side of the second-secondary flow channel 1241, a communication port 1250 may be formed to communicate with a central cavity 1300 (see FIG. 10). The communication port 1250 may be formed on a side of the central cavity 1300.

A plurality of cooling fins 1500 may be integrally formed in the second-primary flow channel 1221 and the second-secondary flow channel 1241 in the form of a column. In this case, the plurality of cooling fins 1500 may be arranged in a plurality of rows and columns such that an n+1-th row of cooling fins may not be arranged in line with an n-th row of cooling fins, but may be alternately arranged with the n-th row of cooling fins.

As will be described later, the plurality of cooling fins 1500 may be formed in the form of a square cone such that a bottom surface with a large area is connected to the suction surface 1002 side. The second cooling channel 1200 is disposed close to the suction side 1002 of the airfoil 1000, so that the second cooling fluid may quickly cool the sidewall of the suction side 1002 of the airfoil 1000.

The airfoil and turbine blades integrally formed with a plurality of flow channels and a plurality of columnar cooling fins may be formed from a mold made from a ceramic core constituting the flow channels and the space around the cooling fins. The turbine blades can be fabricated by forming the ceramic core constituting the flow channels and the space around the cooling fins, casting the turbine blades with the ceramic core inserted in the mold for the turbine blades, and then removing the ceramic core inserted inside the airfoil with chemicals.

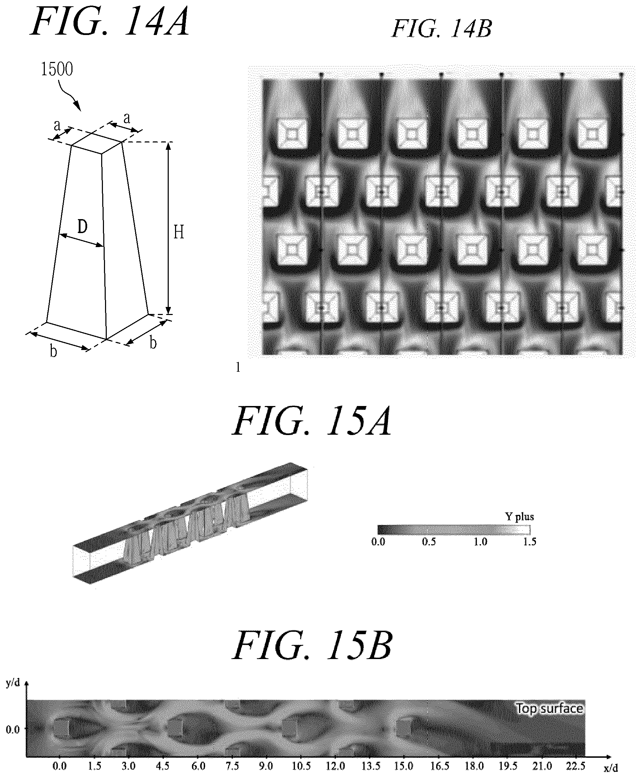

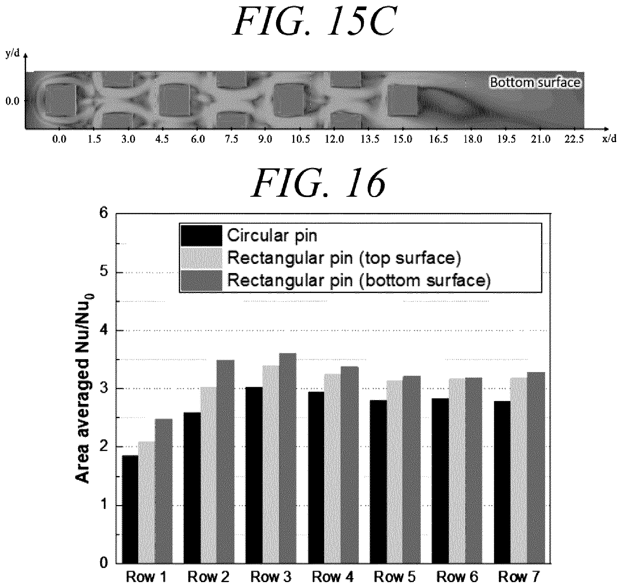

FIG. 14A is a perspective view illustrating the shape of one cooling fin, FIG. 14B is a cross-sectional view illustrating air flowing around a plurality of cooling fins, FIGS. 15A, 15B, 15C are diagrams illustrating a temperature distribution of air flowing around the plurality of cooling fins, and FIG. 16 is a graph showing a comparison of the cooling effects between circular fins and square cone-shaped fins.

As illustrated in FIG. 14A, each of the cooling fins 1500 may be formed in the shape of a square cone. In particular, the top surface of the cooling fin 1500 may be formed as a square with a side length of a, and the bottom surface of the cooling fin 1500 may be formed as a square with a side length of b. In this case, the average of a and b may be referred to as D, and the height of the cooling fin 1500 may be referred to as H. b is larger than a. The end with the larger area (which is bottom surface of the cooling fin 1500) is disposed toward the outer side of the airfoil, i.e., toward the pressure side or the suction side. The direction in which the height of the cooling fins 1500 is measured is referred to as a height direction and the height direction of the cooling fin 1500, when the cooling fins 1500 are formed on the first cooling channel 1100 and the second cooling channel 1200, the height direction is substantially perpendicular to the surface of the pressure side 1001 and the surface of the suction side 1002. The "perpendicular" means that two elements meet each other at a 90 degrees with a manufacturing error or margin.

By varying the shape of the cooling fin 1500 with a change in dimensions of a, b, and H, the cooling effect of air flow was tested.

For example, the cooling fins 1500 may be formed with an upper side length a of 16 or 12 mm, a lower side length b of 24 or 28 mm, and a height H of 32, 24, 26, or 8 mm to compare the cooling effect through simulation. Furthermore, the test may be performed with conditions including the cooling air inflow velocity Vᵢₙₗₑₜ of 7.8, 19.5, or 27.2 m/s and the Reynolds number Re_{Dpin} of 10000, 25000, or 35000. In this case, H/D may have a value from 0.4 to 1.6. In addition, when the spacing between the cooling fins is referred to as S, S/D may be set to about 2.5 for the best cooling performance. Further, an angle between the bottom surface and the side of the square cone-shaped cooling fin may be formed to have a range from 40 to 80 degrees.

FIGS. 15A, 15B, and 15C illustrate the flow and temperature distribution of cooling air flowing around the top and bottom surfaces of a square cone-shaped cooling fin.

The bottom surface of the cooling fin with a larger area is arranged to be connected to a lateral inner circumferential surface within each flow channel, and the top surface of the cooling fin with a smaller area is arranged to be connected to a medial inner circumferential surface within each flow channel. Since the combustion gases flow around the outer surface of the airfoil, the bottom surface of the square cone-shaped cooling fin with the large area may be disposed toward the pressure side and suction side of the outer wall, thereby more efficiently cooling the outer wall of the airfoil.

The graph in FIG. 16 shows a comparison of the cooling performance of the top and bottom surfaces of a circular cooling fin and a square cone-shaped cooling fin.

Here, the spacing S between the cooling fins was such that S/D was 2.5, the aspect ratio was set to 3.5, and the Reynolds number Re_{Dh} was set to 87500.

The graph in FIG. 16 shows the area-averaged Nu/Nu0 values for each of the seven rows of fins for the top and bottom surfaces of the circular and square cone-shaped fins.

The Nusselt number Nu represents the ratio of convective to conductive heat transfer at the surface of an object. For all seven rows of fins, it can be seen that the bottom surfaces of the square cones have the best cooling performance, the top surfaces of the square cones are slightly worse, and the circular cones have the worst cooling performance.

The average of the area-averaged Nu/Nu0 values for each of the seven rows of fins for the top and bottom surfaces of the circular, square, and conical fins may be calculated.

Based on the average value of the area-averaged Nu/Nu0 values, the top surface of the square-conical cooling fin may have a value of about 13% larger and the bottom surface of the square-conical cooling fin may have a value of about 20% larger compared to the circular cooling fin. Thus, it can be seen that the square conical cooling fin has a much better cooling performance than the circular cooling fin.

According to the present disclosure, the plurality of flow channels are formed in the interior of the airfoil such that the plurality of square conical cooling fins are formed in each flow channel, thereby improving the cooling performance of the airfoil.

While the embodiments of the present disclosure have been described, it will be apparent to those skilled in the art that various modifications and variations can be made in the present disclosure through addition, change, omission, or substitution of components without departing from the idea of the disclosure as set forth in the appended claims, and such modifications and changes may also be included within the scope of the present disclosure. Also, it is noted that any one feature of an embodiment of the present disclosure described in the specification may be applied to another embodiment of the present disclosure. Similarly, the present invention encompasses any embodiment that combines features of one embodiment and features of another embodiment.

## Claims

1. A turbine blade (100) mounted on a turbine rotor disk (300) and configured to be rotated by high pressure combustion gases, the turbine blade (100) comprising:
a root part (110) coupled to the turbine rotor disk (300) at a lower side; and
an airfoil (1000) integrally formed on an upper side of the root part and having an internal cooling channel, wherein the airfoil (1000) comprises:
a suction side (1002) forming a convex curved surface protruding outwardly;
a pressure side (1001) forming a concave curved surface recessed toward the suction side;
a leading edge (1003) formed at a leading end to connect the suction side and the pressure side;
a trailing edge (1004) formed at a trailing end to connect the suction side and the pressure side;
a first cooling channel (1100) through which a first cooling fluid introduced from a lower side of the leading edge is discharged toward a rear side of the trailing edge through a first serpentine flow path formed on the pressure side;
a second cooling channel (1200) through which a second cooling fluid introduced from a lower side of the suction side is discharged toward the rear side of the trailing edge through a second serpentine flow path formed on the suction side; and
a plurality of cooling fins (1500) formed to extend from cooling channel surfaces of the first cooling channel and the second cooling channel to surfaces of the pressure side and the suction side in a direction perpendicular to the surfaces of the pressure side and the suction side.

2. The turbine blade of claim 1, wherein the first cooling channel (1100) comprises:
a first inlet (1110) extending downwardly from a bottom of the leading edge to allow the first cooling fluid to flow upward into the first cooling channel therethrough;
a first-primary flow channel (1120) to allow the first cooling fluid introduced through the first inlet to flow upward toward the airfoil tip therethrough;
a first-secondary flow channel (1140) formed adjacent to the first-primary flow channel to allow the first cooling fluid to flow downward toward the root part therethrough; and
a first-tertiary flow channel (1160) formed adjacent to the first-secondary flow channel to allow the first cooling fluid to flow upward toward the airfoil tip therethrough.

3. The turbine blade of claim 2, wherein the first cooling channel (1100) further comprises:
a first-primary diversion channel (1130) extending from an upper end of the first-primary flow channel toward the trailing edge connecting the first-primary flow channel to the first-secondary flow channel;
a first-secondary diversion channel (1150) extending from a lower end of the first-secondary flow channel toward the trailing edge connecting the first-secondary flow channel to the first-tertiary flow channel;
a first-tertiary diversion channel (1170) extending from an upper end of the first-tertiary flow channel toward the trailing edge; and
a first discharge channel (1180) out of which the first cooling fluid flowing through the first-tertiary flow channel is discharged to the outside.

4. The turbine blade of claim 2 or 3, wherein the plurality of cooling fins (1500) are arranged at predetermined intervals from each other in the first-secondary flow channel (1140) and the first-tertiary flow channel (1160).

5. The turbine blade according to any one of claims 2 to 4, wherein the plurality of cooling fins (1500) are each formed in the form of a truncated square cone such that a bottom surface having a large area is connected to the pressure side.

6. The turbine blade according to any one of the preceding claims, wherein the second cooling channel (1200) comprises:
a second-primary inlet (1211) and a second-secondary inlet (1212) extending downwardly from a bottom of the suction side to allow the second cooling fluid to be introduced upward therethrough;
a second-primary flow channel (1221) and a second-tertiary flow channel (1222) to allow the second cooling fluid introduced through the second-primary inlet and the second-secondary inlet to flow upward toward the airfoil tip therethrough; and
a second-secondary flow channel (1241) and a second-quaternary flow channel (1242) formed adjacent to the second-primary inlet and the second-tertiary inlet to allow the second cooling fluid to flow downward toward the root part therethrough.

7. The turbine blade of claim 6, wherein the second cooling channel (1200) further comprises:
a second-primary diversion channel (1231) extending from an upper end of the second-primary flow channel toward the trailing edge connecting the second-primary flow channel to the second-secondary flow channel; and/or
a second-secondary diversion channel (1232) extending from an upper end of the second-tertiary flow channel toward the leading edge connecting the second-tertiary flow channel to the second-quaternary flow channel.

8. The turbine blade of claim 6 or 7, wherein each of the second-secondary flow channel (1241) and the second-quaternary flow channel (1242) is provided at a lower end with a communication port (1250) in communication with a central cavity (1300) defined by a leading edge side cavity, a pressure side cavity, and a suction side cavity such that the second cooling fluids flowing through the second-secondary flow channel (1241) and the second-quaternary flow channel (1242) meet one another in the central cavity (1300) through the communication port (1250),
wherein the second cooling channel (1200) further comprises a second discharge channel (1260) to allow the second cooling fluid in the central cavity to be discharged to the outside therethrough,
wherein a trailing edge side of the central cavity is provided with a connection port (1301) in communication with the second discharge channel.

9. The turbine blade of any one of claims 6 to 8, wherein the plurality of cooling fins (1500) is arranged in the second-secondary flow channel (1241), the second-tertiary flow channel (1222), and/or the second-quaternary flow channel (1242) at predetermined intervals from each other.

10. The turbine blade of claim 9, wherein the plurality of cooling fins (1500) is formed in the form of a truncated square cone such that a bottom surface having a large area is connected to the suction side.

11. A gas turbine comprising:
a compressor (10) configured to compress incoming air;
a combustor (20) configured to mix the compressed air with fuel and combust an air-fuel mixture; and
a turbine (30) configured to generate power with the combustion gases supplied from the combustor, the turbine comprising a turbine vane guiding the combustion gases along a path through which the combustion gases flows, and a turbine blade (100) rotating with the combustion gases flowing through the path, wherein the turbine blade (100) is a turbine blade according to any one of the preceding claims.
